Europäisches Patentamt

European Patent Office

Office européen des brevets

(19)

(11) Veröffentlichungsnummer: **0 194 485**
**A2**

(12) # EUROPÄISCHE PATENTANMELDUNG

(21) Anmeldenummer: 86102230.9

(22) Anmeldetag: 20.02.86

(51) Int. Cl.⁴: **B 23 B 3/26**
**B 23 Q 9/02, B 23 B 5/00**

(30) Priorität: 14.03.85 DE 3509151

(43) Veröffentlichungstag der Anmeldung:
17.09.86 Patentblatt 86/38

(84) Benannte Vertragsstaaten:
AT BE CH DE FR GB IT LI LU NL SE

(71) Anmelder: L. & C. Steinmüller GmbH
Postfach 10 08 55/10 08 65 Fabrikstrasse 1
D-5270 Gummersbach(DE)

(72) Erfinder: Rabe, Gerd
Am Fliederbusch 9
D-5882 Meinerzhagen 2(DE)

(72) Erfinder: Pollak, Gerd, Dipl.-Ing.
Furtwängler Strasse 10
D-5270 Gummersbach 1(DE)

(74) Vertreter: Carstens, Wilhelm, Dipl.-Phys.
L. & C. Steinmüller GmbH Patentabteilung Postfach 10
08 55/10 08 65
D-5270 Gummersbach 1(DE)

(54) **Verfahren und Vorrichtung zur Bearbeitung von Klöpperboden.**

(57) Transportable Vorrichtung, bestehend aus einem vierbeinigen, mit verstellbaren Stützfußen (2, 3) ausgestattetem Gestell (1), einer aus verdrehbaren Exzenterscheiben bestehenden Zentriervorrichtung (4) und einem modifizierten Abkreisaggregat (5), dessen Dreharm (6) eine mit einer Abtasteinrichtung (8) ausgerüsteten Nachführvorrichtung (7) und eine mit einem Bearbeitungs-Werkzeug (10) gekoppelte und mit verschiedenen Kopierlinealen ausstattbaren Kopiervorrichtung (9) trägt, zur Bearbeitung des Randes eines gebördelten oder gewölbten Behälterbodens, insbesondere eines Klöpperbodens, in Vorbereitung einer Schweißnahtverbindung mit einem Rohrstück zur Herstellung eines kreiszylindrischen Reaktionsbehälters, die in dem nach oben offen liegenden Behälterboden koaxial zur Behälterbodenachse eingerichtet wird und wobei während eines jeden Dreharmumlaufs das Bearbeitungswerkzeug eine Vorschub- und eine der Werkstückgeometrie angepaßte Nachführbewegung erfährt.

Fig.1

L. & C. Steinmüller GmbH     5270 Gummersbach, den 11.03.1985
Postfach 10 08 55/10 08 65                         Pa 8503
                                                   Al.

0194485

## Patentanmeldung

## Verfahren und Vorrichtung zur Bearbeitung von Klöpperboden

Die Erfindung betrifft ein Verfahren und eine Vorrichtung zur Bearbeitung des Randes eines gebördelten oder gewölbten Behälterbodens, insbesondere eines Klöpperbodens in Vorbereitung einer Schweißnahtverbindung mit einem Rohrstück zur Herstellung eines kreiszylindrischen Reaktionsbehälters.

Die Bearbeitung des Randes eines Behälterbodens in der Größe von 600 bis 1.200 mm Durchmesser und von bis 12 mm Wandstärke wurde bislang durch von Hand geführte Maschinen vorgenommen.

Der in den Ansprüchen 1 und 2 aufgezeigten Erfindung liegt die Aufgabe zugrunde, ein Verfahren und eine Vorrichtung zur Durchführung des Verfahrens zu entwickeln, durch die die Bearbeitung auf dem Rand des Behälterbodens ausschließlich automatisch erfolgt.

Das gestellte Problem wird verfahrensmäßig durch den kennzeichnenden Teil des Anspruchs 1 und vorrichtungsmäßig durch den kennzeichnenden Teil des Anspruchs 2 gelöst.

./.

2

Eine vorteilhafte Ausgestaltung der Erfindung ist in Anspruch 3 beschrieben.

Ein Ausführungsbeispiel der Erfindung wird anhand der
beiliegenden Figuren näher erläutert. Es zeigen schematisch

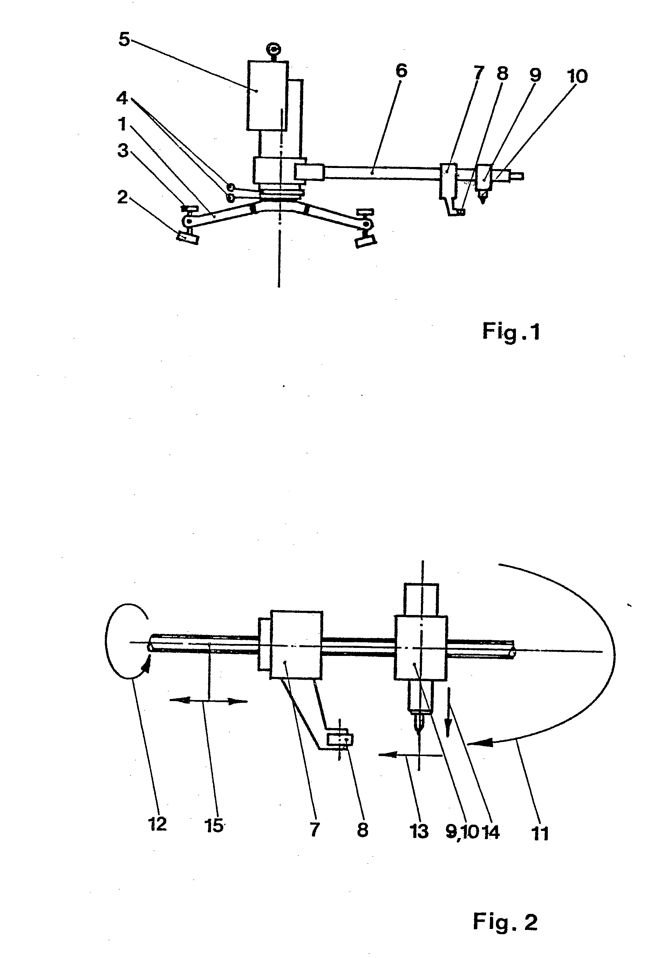

Fig. 1 eine Gesamtansicht der transportablen Vorrichtung,

Fig. 2 eine Teilansicht der Vorrichtung bezüglich des
modifizierten Dreharms in Verbindung mit den
verschiedenen Bewegungsvorgängen.

Die transportable Vorrichtung zur Bearbeitung des Randes
eines Behälterbodens besteht aus einem serienmäßigen,
innenspannenden Abkreisaggregat 5, das über einer Zentriervorrichtung 4 auf einem vierbeinigen Gestell 1
montiert ist.

Das vierbeinige Gestell 1 besitzt an jedem Bein einen
Stützfuß, bestehend aus einem mit dem Bein verbundenen
Gelenk, einer in dem Gelenk geführten Gewindespindel 3
und einem mit der Gewindespindel verbundenen Auflageteil 2.

Der Auflageteil 2 selbst ist entweder ein Elektro-Magnet
oder für den Fall, daß der Behälterboden aus einem austenitischen oder Nichteisen-Material besteht, eine
saugnapfähnliche Hafteinrichtung, die über ein nicht
näher dargestelltes Schlauchsystem mit einem Vakuumgerät
verbunden ist.

Die Zentriervorrichtung 4 besteht aus zwei Exzenterringen bzw. -scheiben, die gegeneinander und gemeinsam zum
vierbeinigen Gestell 1 verdrehbar und festklemmbar angeordnet sind.

./.

In dem obersten Exzenterring ist das innenspannende Abkreisaggregat 5 eingesetzt, dessen Antrieb entweder
elektrisch, pneumatisch oder hydraulisch erfolgen kann,
wobei bei der hydraulischen oder pneumatischen Antriebsversion die Umlaufgeschwindigkeit und das Drehmoment
durch manuell oder elektrisch betätigte Ventile eingestellt, beim elektrischen Antrieb hingegen die Geschwindigkeit über einen Frequenzwandler (2-100 Hz) das Drehmoment durch Strombegrenzung geregelt wird.

Ein serienmäßiges Abkreisaggregat (innenspannend) ist
Grundlage für die Sonderkonstruktion:

1. Das Gerät wird <u>nicht</u> gespannt, sondern mit seinem
   vierbeinigen Gestell <u>aufgestellt</u>, magnetisch gehalten oder durch Unterdruck!
2. Die Versorgungsleitungen für die Spannfüße (elektrisch für Magnete, falls keine Permanentmagnete
   eingesetzt sind bzw. die Unterdruckschläuche <u>müs-
   sen</u> durch eine Bohrung, die durch das gesamte Gerät mittig führt, geleitet werden).

Das Abkreisaggregat 5 der Erfindung besitzt einen modifizierten Dreharm 6, der die mit der Abstech-Einrichtung 10 gekoppelte und mit verschiedenen Kopierlinealen
ausstattbare Kopiervorrichtung 9 trägt und mit einer
Nachführvorrichtung 7 versehen ist. Die Nachführvorrichtung 7 ist mit einer Abtasteinrichtung 8 ausgestattet.
Anstelle der mit verschiedenen Stechstählen ausrüstbaren
Abtech-Einrichtung 10 besteht auch die Möglichkeit, andere denkbare und der Kopiervorrichtung 9 angepaßte
Werkzeuge zur Werkstück-Bearbeitung, beispielsweise
Schleifwerkzeuge, einzusetzen.

Während einer jeden Umlaufbewegung 11 des Dreharms 6
laufen verschiedene Bewegungsvorgänge bezüglich der am
Dreharm befindlichen Vorrichtungen gleichzeitig ab. So
erhält durch den Umlauf eine im Dreharm befindliche

.·/.

4

Gewindespindel eine Teildrehung 12, durch die die mit der
Abstech-Einrichtung 10 gekoppelte Kopiervorrichtung 9
eine Vorschubbewegung 13, 14 sowohl in Richtung zur Behälterbodenachse und relativ zur Nachführvorrichtung als
auch parallel zur Behälterbodenachse entsprechend der
Kontur des Kopierlineals und der Andruckfeder in Richtung zum Rand des Behälterbodens erfährt.

Über die Abtasteinrichtung 8 der Nachführvorrichtung 7,
die bei dieser Ausführung als eine Andruckrolle ausgeführt ist, wird während des Dreharmumlaufs 11 die Werkstückgeometrie erfaßt und die Kopiervorrichtung 9 mit
der Abstech-Einrichtung 10 durch die Bewegung 15 nachgeführt. Dabei bleibt die Stellung der Gewindespindel,
die Nachführ- und die Kopiervorrichtung im Abstand zueinander unverändert.

Für die Bearbeitung eines Behälterbodens muß die transportable Vorrichtung vor deren Einrichtung zunächst vorbereitet werden. Diese Vorbereitung umfaßt die Einstellung der Stützfüße für den entsprechenden Behälterboden-Durchmesser, die Wahl von Magnet- oder Hafteinrichtung für die Stützfüße, die Vorab-Einstellung der Nachführ- und Kopiervorrichtung und die Einstellung des
Axialvorschubes des Abkreisaggregats in die oberste
Stellung.

Die so vorbereitete Vorrichtung wird nun mittels einer
Hebevorrichtung auf den nach oben offen liegenden Behälterboden gehoben. Eine Ausrichtung der Vorrichtung zum
Behälterboden erfolgt zunächst visuell durch einfaches
Abschätzen und Vergleichen der Distanz zwischen den
Stützfüßen und dem Rand des Behälterbodens. Hierauf wird
die Vorrichtung durch Inbetriebnahme der Permanent- oder
Elektromagnete oder der Vakuumeinrichtung für die saugnapfähnliche Hafteinrichtung auf dem Behälterboden
fixiert.

Durch Ermittlung des Abstandes zwischen Dreharm und dem
Rand des Behälterbodens an mehreren Stellen wird die
Vorrichtung mittels der Gewindespindeln der Stützfüße an
den vier Beinen des Gestells manuell in der Höhe so verstellt, daß die Vorrichtung bezüglich des Behälterbodens
achsparallel ausgerichtet ist. Während des Verstellens
des Dreharms zur Abstandmessung, wie zuvor beschrieben,
wird gleichzeitig ermittelt, welcher Abstand zwischen
den beiden, parallelen Achsen der Vorrichtung und des
Behälterbodens vorliegt. Liegt ein Abstand der Achsen
vor, werden die beiden Exzenterringe bzw. -scheiben
zueinander und bezüglich der Vorrichtung im Maß und in
der Richtung solange verdreht, bis die Achsen annähernd
zusammenfallen. Diese Korrektur erfolgt ohne Neueinrichtung der gesamten Vorrichtung. Geringfügige Abweichungen
können darüber hinaus auch noch durch die Nachführvorrichtung kompensiert werden.

Die Nachführ- und Kopiervorrichtung haben eine bestimmte
Stellung zueinander. Durch Verdrehen einer im Dreharm
befindlichen, manuell betätigbaren Gewindespindel und
gleichzeitigem Festhalten einer gelösten Klemmeinrichtung in der Nachführvorrichtung mittels eines Werkzeuges
oder per Hand wird die Abtasteinrichtung so verstellt,
daß sie bei einer Bewegung des Dreharms und bei gleichzeitiger Axialverstellung der gesamten Vorrichtung an
der Werkstückinnenseite ständig mit genügender Feder-
Verspannung anliegt. In dieser gefundenen Stellung wird
die Nachführvorrichtung durch Verriegelung der Klemmeinrichtung auf dem Gewinde fixiert. Wird nun die Gewindespindel betätigt, so ändert sich der Abstand zwischen
Nachführ- und Kopiervorrichtung.

In die Kopiervorrichtung wird nun das erforderliche Bearbeitungswerkzeug eingesetzt und in die Position gefahren, d. h. in den Ausgangspunkt des Bearbeitungsvorganges gebracht. In dieser Position wird das Kopierlineal
mit der entsprechenden Bearbeitungs-Geometrie befestigt.

./.

Durch eine weitere Betätigung der Gewindespindel im Dreharm für den Radialvorschub der Kopiervorrichtung wird das Bearbeitungswerkzeug in den größten Bearbeitungsdurchmesser geführt. Der Radialvorschub erfolgt automatisch und beträgt 0,3 mm pro Umdrehung der Gewindespindel. Über ein am Abkreisaggregat befindliches Axialvorschubrad wird die Spantiefe vorgewählt.

Das Bearbeitungswerkzeug folgt in seiner umlaufenden Bewegung der Werkstückgeometrie über die Abtasteinrichtung, in der horizontalen Bewegung folgt es der Kontur des Kopierlineals, während es sich, bedingt durch die Drehung der Gewindespindel im Dreharm, auf die Nachführvorrichtung zu- oder wegbewegt.

Bei großem Spanvolumen, also bei entsprechender großer Materialstärke, ist der Bearbeitungsvorgang u. U. mehrmals zu wiederholen, die Rückstellung erfolgt jeweils von Hand.

Die Umdrehungszahl der Vorrichtung richtet sich nach dem Bearbeitungsdurchmesser. Wird ein Bearbeitungsstahl HSS eingesetzt, so beträgt die Schnittgeschwindigkeit 8 - 12 m/min. Dann ist bei einem Klöpperboden von $\emptyset$ 1.200 mm die Umdrehungszahl:

(Schnittgeschwindigkeit 12 m/min)

$$U = \frac{12.000}{1.200 \ x} \approx 3,2 \ min^{-1}$$

bzw.

(Schnittgeschwindigkeit 8 m/min)

$$U = \frac{8.000}{12.000 \ x} \approx 2,2 \ min^{-1}$$

Wird ein Hartmetallschneidplättchen eingesetzt, so ist eine Schnittgeschwindigkeit optimal, die zwischen 80 und 120 m/min liegt, entsprechend 22 und 32 Umdrehungen der Vorrichtung pro Minute.

L. & C. Steinmüller GmbH   5270 Gummersbach, den 11.03.1985
Postfach 10 08 55/10 08 65                    P O 1591 485
                                              Al./HP.

I

## Patentansprüche

1. Verfahren zur Bearbeitung des Randes eines gebördelten oder gewölbten Behälterbodens, insbesondere eines Klöpperbodens, in Vorbereitung einer Schweißnahtverbindung mit einem Rohrstück zur Herstellung eines kreiszylindrischen Reaktionsbehälters, d a d u r c h g e k e n n z e i c h n e t, daß

a) in dem nach oben offen liegenden Behälterboden eine transportable Vorrichtung koaxial zur Behälterbodenachse eingerichtet wird, und

b) die auf einem Dreharm (6) der Vorrichtung befindliche Abstech-Einrichtung (10) in Verbindung mit einer Kopier- (9) und Nachführvorrichtung (7) während der gleichförmigen Umlaufbewegung (11) um die Behälterbodenachse den Rand des Behälterbodens bearbeitet, wobei während eines jeden Dreharm-Umlaufs (11, 12)

c) die Abstech-Einrichtung (10), die mit der Kopiervorrichtung (9) gekoppelt ist, eine Vorschubbewegung (13, 14) sowohl in Richtung zur Behälterbodenachse und relativ zur Nachführvorrichtung (7) als auch parallel zur Behälterbodenachse in Richtung zum Rand des Behälterbodens erfährt, und

d) die mit der Abstecheinrichtung (10) gekoppelte Kopiervorrichtung (9) entsprechend der Geometrie des Randes des Behälterbodens nachgeführt (15) wird.

./.

0194485

2. Transportable Vorrichtung zur Durchführung des Verfahrens nach Anspruch 1, g e k e n n z e i c h n e t d u r c h   folgende Merkmale

   a) in einer auf einem vierbeinigen Gestell (1) befindlichen Zentriervorrichtung (4) ist ein Abkreisaggregat (5) eingesetzt,

   b) das vierbeinige Gestell (1) besitzt an jedem Bein einen in der Höhe manuell verstellbaren, mit einem Elektromagneten oder mit einer saugnapfähnlichen Hafteinrichtung schwenkbar angebrachten Stützfuß (2, 3),

   c) die Zentriervorrichtung (4) besteht aus zwei Exzenterringen bzw. -scheiben, die gegeneinander und gemeinsam drehbar auf dem Gestellkopf festklemmbar angeordnet sind,

   d) das Abkreisaggregat (5) besitzt einen modifizierten Dreharm (6), auf dem
      da) die mit Kopierlineal versehene und mit der Abstecheinrichtung (10) gekoppelte Kopiervorrichtung (9) und
      db) die mit einer Abtasteinrichtung (8) ausgerüstete Nachführvorrichtung (7) einstell- und bewegbar angeordnet sind

3. Transportable Vorrichtung nach den Ansprüchen 1 und 2, d a d u r c h   g e k e n n z e i c h n e t, daß anstelle der Abstecheinrichtung (10) andere Bearbeitungsmethoden und Bearbeitungswerkzeuge eingesetzt werden.

0194485

1/1

**Fig.1**

**Fig. 2**